# EUROPÄISCHE PATENTSCHRIFT

(11) **EP 0 515 825 B1**
(45) Veröffentlichungstag und Bekanntmachung des Hinweises auf die Patenterteilung: **31.01.1996**
(21) Anmeldenummer: 92106588.4
(22) Anmeldetag: 16.04.1992
(51) Int. Cl.: B29C 53/06, B65D 75/36, B29C 71/04, B23K 26/00

(54) **Tiefgezogene Verpackung mit integrierten Sollbruchstellen und Verfahren zu ihrer Herstellung**
Deep-drawn packaging with an integrated breaking line and process for its production
Emballage, formé par étirage avec une ligne de rupture intégrée et procédé pour sa fabrication

(30) Priorität: 26.04.1991 DE 4113714
(43) Veröffentlichungstag der Anmeldung: 02.12.1992
(73) Patentinhaber: HOECHST AKTIENGESELLSCHAFT, D-65926 Frankfurt am Main (DE)
(72) Erfinder: Beer, Ekkehard, W-6208 Bad Schwalbach (DE); Rentzsch, Tobias, Dr., W-6380 Bad Homburg (DE); Schad, Alfred, W-6200 Wiesbaden (DE)

(56) Entgegenhaltungen:
- EP-A- 0 357 841
- EP-A- 0 398 447
- FR-A- 2 576 836
- US-A- 3 909 582
- US-A- 4 562 333

## Beschreibung

Die vorliegende Erfindung betrifft eine tiefgezogene Verpackung mit integrierten Sollbruchstellen aus Kunststoff und ein Verfahren zu ihrer Herstellung.

Seit vielen Jahren werden Verpackungsgüter jeglicher Art in zunehmendem Umfang in Kunststoffe verpackt. Der Grund hierfür ist der, daß Kunststoffe im allgemeinen eine ausnehmend gute mechanische Beständigkeit besitzen, die den Transport und die Lagerung der Verpackungsgüter erleichtert. Außerdem besitzen die Kunststoffe meistens eine hervorragende Sperrwirkung gegenüber Wasser und Wasserdampf, wodurch wirksam ein Austrocknen der Verpackungsgüter oder deren Verschmutzung von außen unterbunden wird. Ein weiterer Grund ist der, daß die Kunststoffe durch Formgebung und Einfärbung leicht in eine optisch ansprechende Erscheinungsform gebracht werden können, wodurch nach dem Willen der Hersteller das ästhetische Empfinden der Verbraucher in besonders angenehmer Weise angesprochen und der Eindruck von Qualität hervorgerufen werden soll. Ein Problem bei den Verpackungen aus Kunststoff entsteht im allgemeinen dann, wenn der Verpackungsinhalt beim Endverbraucher aus der Verpackung herausgeschält/gegossen werden soll, die mechanische Festigkeit des Kunststoffs dieses aber verhindert. Zur Lösung dieser Unbequemlichkeit werden z. B. tiefgezogene Mehrfachpackungen aus Kunststoff üblicherweise mit Perforationen oder Einstanzungen, mit einem Wort mit Sollbruchstellen versehen, an denen der Kunststoff durch Einwirkung geringer Kraft abgebrochen werden kann, wonach die Packungen sich dann z. B. leicht trennen lassen. Bei bestimmten Arten von Kunststoffen hat es sich in der Praxis aber immer wieder als schwierig erwiesen, auf mechanische Art Sollbruchstellen zuverlässig wirksam vorzusehen.

Aufgabe der vorliegenden Erfindung war es, tiefgezogene Mehrfachpackungen aus Kunststoff zu schaffen, insbesondere aus Polyolefin, Polyester oder Polystyrol, die einerseits dicht schließen und so das Packgut wirksam vor äußeren Schädigungen abschirmen und vor Austrocknung schützen, die aber andererseits Sollbruchstellen besitzen, an denen sie sich einerseits leicht voneinander abtrennen lassen und andererseits ohne große Mühe öffnen lassen und den Zugriff auf das Packgut ermöglichen, und die darüber hinaus auch noch problemlos auf automatischen Verpackungsmaschinen herstellbar sind.

Gelöst wird diese Aufgabe durch eine Verpackung der eingangs genannten Gattung, deren Kennzeichenmerkmal darin zu sehen ist, daß sie Sollbruchstellen aufweist, die durch diskrete Bereiche in der Kunststoffmatrix gebildet sind, an denen durch Einwirkung von Laserstrahlen die mechanischen Eigenschaften des Kunststoffes verändert sind.

Als Kunststoffe werden erfindungsgemäß vorzugsweise Polyolefine wie Polyethylen oder Polypropylen, Polyester wie Polyethylenterephthalat, Polystyrol oder substituiertes Polystyrol eingesetzt. Die Kunststoffe liegen vorzugsweise in Form von Folien vor. Die Folien weisen Dicken im Bereich zwischen 6 und 1000 µm, vorzugsweise zwischen 20 und 500 µm, auf. Es kann sich bei den Folien um ein- oder mehrschichtige Folien handeln, die zur Verbesserung ihrer mechanischen Eigenschaften streckorientiert sein können, besonders bevorzugt biaxial streckorientiert.

Die diskreten Bereiche in der Kunststoffmatrix können punktuelle Bereiche sein, die jeweils benachbart zueinander eine zusammenhängende Sollbruchstelle bilden, es können aber auch Linien sein, die sich in der Folienebene in Form von Kurven oder geschlossenen Figuren erstrecken. Die Linien besitzen erfindungsgemäß bevorzugt eine Breite im Bereich von 0,1 bis 10 µm, insbesondere von 0,5 bis 5 µm.

Als Laserstrahlen können prinzipiell alle Arten von Laserstrahlen eingesetzt werden. Bevorzugt handelt es sich um Strahlen, die von einem CO₂-Laser ausgestrahlt werden. Ein typischer CO₂-Laser ist ein gepulster Laser, also ein diskontinuierlicher Laser, mit einer Dauerleistung von etwa 100 W und einer Frequenz von circa 10 kHz.

Derartige Strahlen erzeugen bei den genannten Kunststoffen Veränderungen der mechanischen Eigenschaften, die, vereinfacht ausgedrückt, als eine Art Versprödung bezeichnet werden können. Die für die Behandlung vorgesehenen Kunststoffe liegen üblicherweise in einem Zustand vor, der als selbsttragend charakterisiert werden kann. Wenn eine derartige Folie aus Kunststoff mittels eines Laserstrahles erfindungsgemäß behandelt wird, wird ihre Biegefestigkeit an der von dem Laserstrahl getroffenen Stelle reduziert bzw. ganz aufgehoben. An dieser Stelle neigt die Folie dann dazu, beim Biegen zu brechen bzw. bei mechanischer Beanspruchung einzureißen.

Die Erfindung betrifft auch ein Verfahren zur Herstellung einer Sollbruchstelle innerhalb einer Kunststoffmatrix, nach dem der Kunststoff, vorzugsweise eine oder mehrere Folie(n) aus Kunststoff, in eine Bearbeitungsstation eingeführt und darin mit wenigstens einem Laserstrahl mit einer ausreichenden Intensität bestrahlt wird (werden). Die Bestrahlung kann punktuell erfolgen oder entlang von zusammenhängenden Linien, die sich in der Folienebene erstrecken. Die Bearbeitung der Kunststoffmatrix erfolgt erfindungsgemäß bevorzugt kontinuierlich.

Die Intensität, mit der der Kunststoff bestrahlt werden muß, richtet sich nach der Dicke der Folien und nach der chemischen Zusammensetzung des Kunststoffs. Die Leistung des Lasers ist ausreichend, um bei den üblichen Verpackungsgeschwindigkeiten alle Schritte durchführen zu können. Eine ausreichende Intensität bei einer Folie z. B. aus Polypropylen mit einer Dicke von 25 µm, die mit einer Geschwindigkeit von 100 mm/s durch eine Behandlungsstation geführt wurde, liegt bei etwa 50 W.

Nachfolgend sollen beispielhaft zwei tiefgezogene Mehrfachverpackungen der erfindungsgemäßen Art näher beschrieben werden, ohne daß die Erfindung jedoch durch die dargestellten Ausführungsformen beschränkt sein soll.

Eine tiefgezogene Mehrfachverpackung für Flüssigkeiten umfaßt beispielsweise mehrere in einer Ebene nebeneinander angeordnete runde Aufnahmebehälter, die über Stege aus Kunststoff miteinander verbunden und jeweils mit Abdeckfolien geschlossen sind. Beispiele hierfür sind Behälter für Joghurt, Konfitüre u.ä. Die Aufnahmebehälter sind aus amorpher Polyesterfolie, insbesondere aus Polyethylenterephthalat, gefertigt, während die Abdeckfolien siegelfähige Polyesterfolien sein können, die Siegelschichten z. B. aus einem Copolyester mit Terephthalsäure- und Isophthalsäurebausteinen gebildet sein können. Das überschüssige Material kann durch Laserstrahlen mit hoher Leistung abgetrennt werden, so daß nur noch Verbindungsstege zwischen den Einzelbehältern bestehen bleiben. Im Bereich der besagten Verbindungsstege werden mit Laserstrahlen mit gezielt reduziert eingestellter Leistung Sollbruchstellen erzeugt, die beide Folienlagen, den amorphen Polyester der tiefgezogenen Aufnahmebehälter und die siegelfähige Abdeckfolie betreffen. Wenn Aufziehlaschen zum vereinfachten Abziehen der Abdeckfolie von den einzelnen Aufnahmebehältern vorgesehen sind, werden im Bereich der Abziehlaschen mittels Laserstrahlen mit reduzierter Leistung Sollbruchstellen vorgesehen, die vorzugsweise nur den amorphen Polyester der Aufnahmebehälter betreffen.

Eine andere Verpackung der erfindungsgemäßen Art kann eine Blisterverpackung, beispielsweise für Tabletten, sein. Als tiefziehfähige Bodenfolie eignet sich beispielsweise eine nicht orientierte Folie aus isotaktischem Polypropylen, die nach dem Tiefziehprozeß Aufnahmeeinbuchtungen aufweist, welche in der Folienebene nebeneinander angeordnet sind. Die Aufnahmeeinbuchtungen sind mittels einer Abdeckfolie aus biaxial streckorientierter, opaker, heißsiegelfähiger Polypropylenfolie verschlossen. Die Sollbruchstellen können durch Perforationen und/oder gezielte Bestrahlung der beiden Kunststoffschichten in den Bereichen zwischen den einzelnen Aufnahmeeinbuchtungen mit Laserstrahlen und zusätzlich durch kreuzförmige oder kreisförmige Bestrahlung der Abdeckfolie im Bereich der Aufnahmeeinbuchtungen mit Laserstrahlen hergestellt werden.

## Patentansprüche

1. Tiefgezogene Verpackung aus Kunststoff mit integrierten Sollbruchstellen, dadurch gekennzeichnet, daß die Sollbruchstellen durch diskrete Bereiche in der Kunststoffmatrix gebildet sind, an denen durch Einwirkung von Laserstrahlen die mechanischen Eigenschaften des Kunststoffes durch Versprödung veränder sind, wobei es durch die Einwirkung der Laserstrahlen zu keiner Verdampfung des Kunststoffes kommt.

2. Verpackung nach Anspruch 1, dadurch gekennzeichnet, daß die Kunststoffe ausgewählt sind aus der Gruppe Polyolefine wie Polyethylen oder Polypropylen, Polyester wie Polyethylenterephthalat, Polystyrol oder substituiertes Polystyrol, Polyvinylchlorid oder Polymere auf Basis von Polyvinylchlorid.

3. Verpackung nach Anspruch 1 oder 2, dadurch gekennzeichnet, daß die Kunststoffe in Form von Folien vorliegen, die Dicken im Bereich zwischen 6 und 1000 µm, vorzugsweise zwischen 20 und 500 µm, aufweisen.

4. Verpackung nach einem der Ansprüche 1 bis 3, dadurch gekennzeichnet, daß wenigstens zwei Folien übereinandergelegt werden.

5. Verpackung nach Anspruch 4, dadurch gekennzeichnet, daß vorzugsweise eine der übereinandergelegten Folien streckorientiert ist, besonders bevorzugt biaxial streckorientiert.

6. Verpackung nach einem der Ansprüche 1 bis 5, dadurch gekennzeichnet, daß die diskreten Bereiche in der Kunststoffmatrix punktuelle Bereiche bilden, die jeweils benachbart zueinander eine zusammenhängende Sollbruchstelle bilden.

7. Verpackung nach einem der Ansprüche 1 bis 5, dadurch gekennzeichnet, daß die diskreten Bereiche in der Kunststoffmatrix Linien sind, die sich in der Folienebene in Form von Geraden, Kurven oder geschlossenen Figuren erstrecken.

8. Verpackung nach einem der Ansprüche 1 bis 7, dadurch gekennzeichnet, daß als Laserstrahlen CO₂-Laserstrahlen gepulster Art eingesetzt werden..

9. Verfahren zur Herstellung einer Sollbruchstelle innerhalb einer Kunststoffmatrix, wobei der Kunststoff, insbesondere Folien aus Kunststoff, in eine Bearbeitungsstation eingeführt und darin mit wenigstens einem Laserstrahl mit einer ausreichenden Intensität bestrahlt werden.

10. Verfahren nach Anspruch 9, dadurch gekennzeichnet, daß die Bestrahlung punktuell und/oder entlang von zusammenhängenden Linien, die sich in der Folienebene erstrecken, erfolgt.

## Claims

1. A thermoformed plastic package with integrated predetermined breaking points, wherein the predetermined breaking points are formed by discrete regions in the plastic matrix at which the mechanical properties of the plastic have been modified due to embrittlement as a result of the action of laser beams, without any evaporation of the plastic material occurring by the action of laser beams.

2. A package as claimed in claim 1, wherein the plastics are selected from the group comprising polyolefins, such as polyethylene or polypropylene, polyesters, such as polyethylene terephthalate, polystyrene or substituted polystyrene, polyvinyl chloride or polymers based on polyvinyl chloride.

3. A package as claimed in claim 1 or 2, wherein the plastics are in the form of films which have thicknesses in the range from 6 to 1000 µm, preferably from 20 to 500 µm.

4. A package as claimed in any one of claims 1 to 3, wherein at least two films are placed one on top of the other.

5. A package as claimed in claim 4, wherein one of the films placed on top of one another has preferably been stretch-oriented, particularly preferably biaxially stretch-oriented.

6. A package as claimed in any one of claims 1 to 5, wherein the discrete regions in the plastic matrix form point regions which, in each case adjacent to one another, form a coherent predetermined breaking point.

7. A package as claimed in any one of claims 1 to 5, wherein the discrete regions in the plastic matrix are lines extending in the film plane in the form of straight lines, curves or closed figures.

8. A package as claimed in any one of claims 1 to 7, wherein the laser beams employed are pulsed CO₂ laser beams.

9. A process for the production of a predetermined breaking point within a plastic matrix, in which the plastic, in particular a plastic film, is introduced into a treatment station and irradiated therein by means of at least one laser beam of sufficient intensity.

10. The process as claimed in claim 9, wherein the irradiation is carried out at individual points and/or along coherent lines extending in the film plane.

## Revendications

1. Emballage en matière plastique formé par emboutissage, présentant des lignes de rupture intégrées, caractérisé en ce que les lignes de rupture sont formées par des domaines discrets dans la matrice de matière plastique, dans lesquels les propriétés mécaniques du plastique sont modifiées pour le rendre cassant sous l'action de rayons laser, aucune vaporisation de la matière plastique ne se produisant sous l'action des rayons laser.

2. Emballage selon la revendication 1, caractérisé en ce que les matières plastiques sont choisies parmi les polyoléfines telles que le polyéthylène ou le polypropylène, les polyesters tels que le polytéréphtalate d'éthylène, le polystyrène ou le polystyrène substitué, le polychlorure de vinyle ou des polymères à base de polychlorure de vinyle.

3. Emballage selon la revendication 1 ou 2, caractérisé en ce que les matières plastiques se présentent sous forme de feuilles qui ont une épaisseur dans la gamme entre 6 et 1000 micromètres, de préférence entre 20 et 500 micromètres.

4. Emballage selon l'une des revendications 1 à 3, caractérisé en ce que au moins deux feuilles sont superposées.

5. Emballage selon la revendication 4, caractérisé en ce que de préférence l'une des feuilles superposées est orientée par étirage, plus particulièrement orientée par étirage bi-axial.

6. Emballage selon l'une des revendications 1 à 5, caractérisé en ce que les domaines discrets dans la matrice de matière plastique constituent des domaines ponctuels qui, les uns à coté des autres, forment en conséquence une ligne de rupture.

7. Emballage selon l'une des revendications 1 à 5, caractérisé en ce que les domaines discrets dans la matrice de matière plastique sont des lignes, qui s'étendent dans le plan de la feuille en forme de droites, de courbes ou de figures fermées.

8. Emballage selon l'une des revendications 1 à 7, caractérisé en ce que l'on utilise comme rayons laser des rayons d'un laser à CO₂ de type pulsé.

9. Procédé de réalisation d'une ligne de rupture dans une matrice de matière plastique, dans lequel la matière plastique, en particulier sous forme de feuilles de matière plastique, est introduite dans un poste de traitement et y est soumise à l'action d'au moins un rayon laser d'une intensité suffisante.

10. Procédé selon la revendication 9, caractérisé en ce que l'exposition se fait de manière ponctuelle et/ou le long de lignes correspondantes, qui s'étendent dans le plan de la feuille.
